# EUROPÄISCHE PATENTANMELDUNG

(11) **EP 2 335 994 A1**
(43) Veröffentlichungstag der Anmeldung: **22.06.2011**
(21) Anmeldenummer: 10015819.5
(22) Anmeldetag: 20.12.2010
(51) Int. Cl.: B61D 3/20, B61L 15/00, B60L 1/12

(54) **Güterzug**

(30) Priorität: 21.12.2009 DE 102009055097; 09.07.2010 DE 102010031173
(71) Anmelder: Goller, Georg, 27283 Verden (DE)
(72) Erfinder: Goller, Georg, 27283 Verden (DE)
(74) Vertreter: Meinke, Dabringhaus und Partner GbR

(57) **Zusammenfassung**

Die Erfindung betrifft einen Güterzug (100) mit einem Triebfahrzeug (10) und Güterwagen (12, 13, 14), die durch eine Energieversorgungsleitung (22) und Datenleitung verbunden sind. Um den Güterzug (100) so auszustatten, dass die Energieversorgungsleitung (22) unabhängig von der Stromart grenzüberschreitend Verwendung finden kann, sieht die Erfindung vor, dass mindestens ein Güterwagen (12, 13, 14) mit einer Thyristorsteuerung (24) ausgestattet ist.

## Beschreibung

Die Erfindung betrifft einen Güterzug mit einem Triebfahrzeug und Güterwagen, die durch eine Energieversorgungsleitung und Datenleitung verbunden sind.

Zudem betrifft die Erfindung ein Verfahren zur energetischen Versorgung von Einheiten eines Güterzuges, wie bspw. Kältemaschinen in Behältern für temperaturgeführte Transporte, mittels einer Energieversorgungsleitung, insbesondere eine Zugsammelschiene.

Güterzüge der eingangs genannten Art sind aus dem Stand der Technik bekannt und werden aus auf ihren Verwendungszweck ausgerichteten Güterwagen und Triebfahrzeugen, die zumeist Lokomotiven sind, gebildet. Besondere Bedeutung kommt dabei Güterwagen zu, die speziell für Behälter und hier wiederum für Großraumbehälter, z. B. Container und Wechselbehälter für den Lkw-Transport konzipiert sind. Die Bedeutung dieser Container resultiert daraus, dass sie die Transportkette über Schiene und Straße schließen können und somit in Zügen des kombinierten Verkehrs Schiene/Straße eingesetzt werden können.

In den vorbekannten Güterzügen sind die Güterwagen fest miteinander verbunden. Dies kann beispielsweise entweder durch eine Stangenverbindung oder durch geeignete automatische Kupplungen gegeben sein. Eine Trennung der Stangenverbindung zwischen diesen Güterwagen kann nur in dafür ausgerüsteten Werkstätten erfolgen. An den Enden dieser fest verbundenen Güterwagen befinden sich die üblichen Wagenverbindungen, bestehend bspw. aus Puffern, Schraubenkupplungen und Bremsleitungen. Zusätzlich zu diesen standardmäßigen Verbindungen sind Güterzüge der eingangs genannten Art durch Energieversorgungsleitungen und Datenleitungen miteinander verbunden. Hierzu zählt insbesondere die Zugsammelschiene, d. h. ein Kabel, das sämtliche Wagen des Zuges untereinander und mit dem Triebwagen verbindet, um bestimmte Einheiten, wie bspw. Kältemaschinen in Behältern für den temperaturgeführten Transport oder für Heizungen in Tankbehältern, von zentraler Stelle mit Energie zu versorgen. Hierzu wird bspw. in Gleichstromsystemen der Strom für die Zugenergieversorgung direkt aus der Oberleitung entnommen und in die Zugsammelschiene gespeist.

Internationale Bahnstrecken können mit verschiedenen Stromarten betrieben werden. Das deutsche, österreichische und schweizerische Eisenbahnnetz haben bspw. Wechselstrom, wohingegen das niederländische, belgische, polnische und tschechische Eisenbahnnetz mit Gleichstrom betrieben werden.

Hieraus ergibt sich die Problematik, dass auf eine spezielle Stromart ausgerichtete Energieversorgungsleitungen von Güterzügen der eingangs genannten Art nicht in sämtlichen nationalen Schienennetzen Verwendung finden können.

Es ist daher Aufgabe der Erfindung, einen Güterzug der eingangs genannten Art zur Verfügung zu stellen, dessen Energieversorgungsleitung unabhängig von der Stromart (Gleichstrom/Wechselstrom) grenzüberschreitend Verwendung finden kann.

Diese Aufgabe wird mit den Merkmalen des Anspruchs 1 gelöst. Vorteilhafte Ausgestaltungen der Erfindung manifestieren sich in den Unteransprüchen.

Die Erfindung sieht vor, dass mindestens ein Güterwagen mit einer Thyristorsteuerung (Converter) ausgestattet ist. Im Rahmen der Erfindung ist die Thyristorsteuerung mit der Energieversorgungsleitung verbunden, so dass die über eine Oberleitung bzw. über das Triebfahrzeug bezogene Stromart in der Energieversorgungsleitung von der Thyristorsteuerung in eine andere Stromart umgewandelt werden kann.

Der Vorteil der Erfindung ist es, dass die Thyristorsteuerung es ermöglicht, Güterzüge grenzüberschreitend auch in Ländern einzusetzen, deren Bahnstromsysteme unterschiedliche Spannungen aufweisen, so dass jeder Güterwagen, der bspw. über einen Anschluss 380V verfügt, unabhängig von der aus der Oberleitung bzw. aus dem Triebfahrzeug bezogene Stromart mit Energie versorgt werden kann, um bestimmte Einheiten in dem Güterzug, wie bspw. Kältemaschinen in Behältern für temperaturgeführten Transport oder für Heizungen in Tankbehältern, deren Inhalt bei konstanter Temperatur befördert werden müssen, zu versorgen.

Kernidee der Erfindung ist es, die Stromart in einer Energieversorgungsleitung eines Güterzuges mittels einer Thyristorsteuerung unabhängig zu gestalten.

Eine vorteilhafte Ausgestaltung der Erfindung sieht vor, dass sämtliche Güterwagen des Güterzugs mit einer Thyristorsteuerung ausgestattet sind. Die in den einzelnen Güterwagen befindlichen Thyristorsteuerungen sind wiederum jeweils mit der Energieversorgungsleitung verbunden.

Als Triebfahrzeuge des erfindungsgemäßen Güterzuges dienen vorzugsweise Diesel- oder Elektro-Lokomotiven. Diese sind über die standardmäßigen Verbindungen wie Schraubenkupplung, Bremsleitung, Zugsammelschiene und UIC-Leitungen mit den Güterwagen verbunden. Die Triebfahrzeuge dienen der Beförderung des Zuges auf der Streckenfahrt und, wo dies möglich bzw. sinnvoll ist, auch den Fahrten in Bahnhofsbereichen und Umschlagterminals

In dem Güterwagen, der das Ende des Güterzuges bildet, befindet sich zweckmäßigerweise ein Steuerstand, der für den Wendezugbetrieb ausgestattet ist.

Der Wendezugbetrieb kann sowohl mit Elektrolokomotiven als auch mit Diesellokomotiven durchgeführt werden. Die Fahrtrichtung kann somit einfach wie im Triebwagenbetrieb gewechselt werden. Hierdurch entfällt auch die bei konventionellen Zügen notwendige manuelle Bremsprobe.

Vorteilhafterweise ist der Güterwagen, auf dem sich der Wendzugbetrieb befindet, mit einem Sekundärantrieb ausgestattet, der vorzugsweise mit Elektromotoren erfolgt.

Der Sekundärantrieb ist insbesondere dann sinnvoll, wenn als Triebfahrzeug eine Elektrolokomotive eingesetzt wird, die jedoch z.B. für eine Einfahrt in ein Umschlagterminal nicht geeignet ist. Hier übernimmt der Sekundärantrieb die Traktion. Das Triebfahrzeug erfüllt damit weiterhin seine Funktion. Die Ein- und Ausfahrt an den Terminals werden jedoch beschleunigt. Dadurch vergrößert sich deren Kapazität. Insbesondere Teilumschläge/Linienzugkonzepte werden dadurch sinnvoller und wirtschaftlicher. Zudem können Anschlussgleise auch in den Bahnhäfen problemlos und wirtschaftlich angefahren werden, die nicht über eigene Rangierlok verfügen. Die Einsatzgebiete des kombinierten Verkehrs und seine Wirtschaftlichkeit nehmen damit erheblich zu.

Eine vorteilhafte Ausgestaltung der Erfindung sieht vor, dass ein Energieblock in einen Güterwagen integriert ist. Die Energie für den Sekundärantrieb wird vorzugsweise aus dem Energieblock bezogen, der sich ebenfalls vorzugsweise in dem Güterwagen befindet, der mit dem Sekundärantrieb ausgestattet ist. Bevorzugte Energiemittel des Energieblocks sind Batterien und Wasserstoffzellen. Auch ist es im Rahmen der Erfindung möglich, dass ein Energiemittel des Energieblocks ein Dieselaggregat ist.

Ein weiterer Vorteil der Erfindung ist es, dass eine unterbrechungsfreie Stromversorgung sichergestellt ist, nämlich dadurch, dass
- die Energieversorgung während der Streckenfahrt über die Energieversorgungsleitung, d. h. vorzugsweise über die Zugsammelschiene des Triebfahrzeugs erfolgt;
- die Energieversorgung auch während der Fahrt durch den Sekundärantrieb gegeben ist;
- die Energie für den Sekundärantrieb durch den Energieblock erfolgt.

Zudem ist im Rahmen der Erfindung gewährleistet, dass die Energie für Temperaturführungen durch Batterien in den Güterwagen gegeben ist und eine stationäre Energieversorgung in den Terminals erfolgt.

Die Erfindung sieht zudem ein Verfahren zur energetischen Versorgung von Einheiten eines Güterzuges, wie bspw. Kältemaschinen in Behältern für temperaturgeführte Transporte, mittels einer Energieversorgungsleitung vor, wobei eine Stromart der Energieversorgungsleitung von einer in einen Güterwagen des Güterzugs integrierten Thyristorsteuerung in eine andere Stromart umgewandelt wird. Hierzu ist es von Vorteil, dass die Thyristorsteuerung mit der Energieversorgungsleitung gekoppelt wird.

Schließlich sieht die Erfindung die Verwendung einer Thyristorsteuerung für einen Güterzug gemäß einem der Ansprüche 1 bis 7 und/oder einen Güterwagen gemäß einem der Ansprüche 8 bis 11 vor.

Im Folgenden wird die Erfindung anhand der Zeichnungen näher erläutert. Es zeigt in schematischer Darstellung:
- Fig. 1: einen Güterzug gemäß der Erfindung;
- Fig. 2: eine weitere Ausführungsform des erfindungsgemäßen Güterzugs; und
- Fig. 3: einen Güterwagen gemäß der Erfindung.

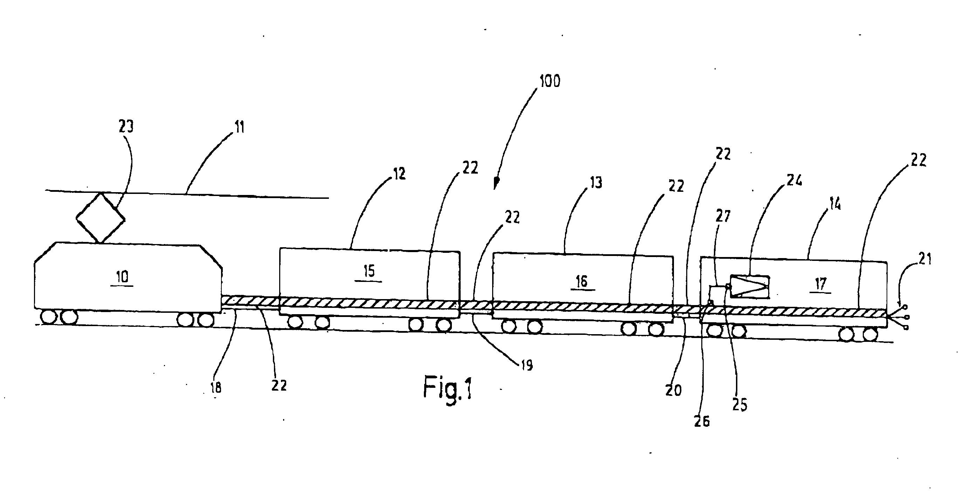

Fig. 1 zeigt einen Güterzug gemäß der Erfindung, der mit dem Bezugzeichen 100 versehen ist.

Der Güterzug 100 weist ein Triebfahrzeug 10 z. B. in Gestalt einer elektrischen oder dieselelektrischen Lokomotive auf. Alternativ kann das Triebfahrzeug 10 auch in Gestalt einer Hybridlokomotive vorliegen. Hybridlokomotiven zeichnen sich dadurch aus, dass sie besonders umweltfreundlich sind und sowohl elektrisch via Fahrdraht/Oberleitung 11 als auch unabhängig davon betrieben werden können. Der Güterzug 100 weist zudem Güterwagen 12, 13, 14 auf, die mit Behältern 15, 16, 17 versehen sind. Die Behälter 15, 16, 17 liegen vorzugsweise als Großraumbehälter vor, d. h. als Container, mit denen das Verladen, Befördern, Lagern und Entladen von speziellen Gütern möglich ist. In dem hier gezeigten Ausführungsbeispiel handelt es sich bei den Gütern um Waren, die während der Fahrt bspw. eine permanente Kühlung benötigen.

Die Verbindungen zwischen dem Triebfahrzeug 10 und dem Güterwagen 12 werden durch eine herkömmliche Schraubenkupplung realisiert. Die Güterwagen 12, 13, 14 untereinander sind durch feste mechanische Verbindungen, vorzugsweise feste mechanische Kupplungsverbindungen 18, 19, 20, gegeben. Alternativ können die Verbindungen zwischen dem Triebfahrzeug 10 und dem Güterwagen 12 und/oder den Güterwagen 12, 13, 14 untereinander durch eine automatische Kupplung gegeben sein. Eine Trennung der festen Verbindungen 18, 19, 20 ist nur in dafür vorgesehenen Werkstätten möglich. An den Enden der Güterwagenabfolge befinden sich die üblichen Wagenverbindungen 21, bestehend aus Puffern, Schraubenkupplungen, Bremsleitungen und UIC-Kabeln.

Die Güterwagen 12, 13, 14 sind zudem durch in Fig. 1 nicht gezeigte Steuerleitungen und Datenleitungen miteinander verbunden. Darüber hinaus sind die Güterwagen 12, 13, 14 mit einer Energieversorgungsleitung 22 in Gestalt einer Zugsammelschiene verbunden. Bei der Zugsammelschiene handelt es sich um ein Kabel, das die Güterwagen 12, 13, 14 untereinander und mit dem Triebfahrzeug 10 verbindet, um bestimmte Einheiten in dem Güterzug 100 , wie bspw. Kältemaschinen in den Behältern für den temperaturgeführten Transport von zentraler Stelle mit Energie zu versorgen. Hierzu wird der Strom für die Energieversorgung direkt aus der Oberleitung 11 mittels des Stromabnehmers 23 entnommen und in die Energieversorgungsleitung 22, d. h. in die Zugsammelschiene gespeist.

Wie aus Fig. 1 weiterhin hervorgeht, weist der Güterzug 100 an seinem Ende den Güterwagen 14 auf, der mit einer Thyristorsteuerung 24 in Gestalt eines Converters ausgestattet ist. Der Güterwagen 14 wird in einer hier benutzten Terminologie auch als Systemwagen bezeichnet. Die Thyristorsteuerung 24 wandelt die von dem Triebfahrzeug 10 bezogenen Stromart, d. h. Gleich- oder Wechselstrom, der Energieversorgungsleitung 22 in die jeweils andere Stromart um. Die Thyristorsteuerung 24 und die Energieversorgungsleitung 22 sind miteinander verbunden. Die Kopplung zwischen Thyristorsteuerung 24 und Energieversorgungsleitung 22 erfolgt vorzugsweise derart, dass die Thyristorsteuerung 24 und die Energieversorgungsleitung 22 über eine Energieverbindungsleitung 27 miteinander verbunden sind. Hierzu weist zudem die Thyristorsteuerung 24 ein Anschlussmittel 25 und die Energieversorgungsleitung 22 ein Anschlussmittel 26 auf, die wiederum mit der Energieverbindungsleitung 22 gekoppelt sind. Diese Kopplungen können in einer für die Verbindungen von Thyristorsteuerungen und Energieleitungen üblichen Art erfolgen.

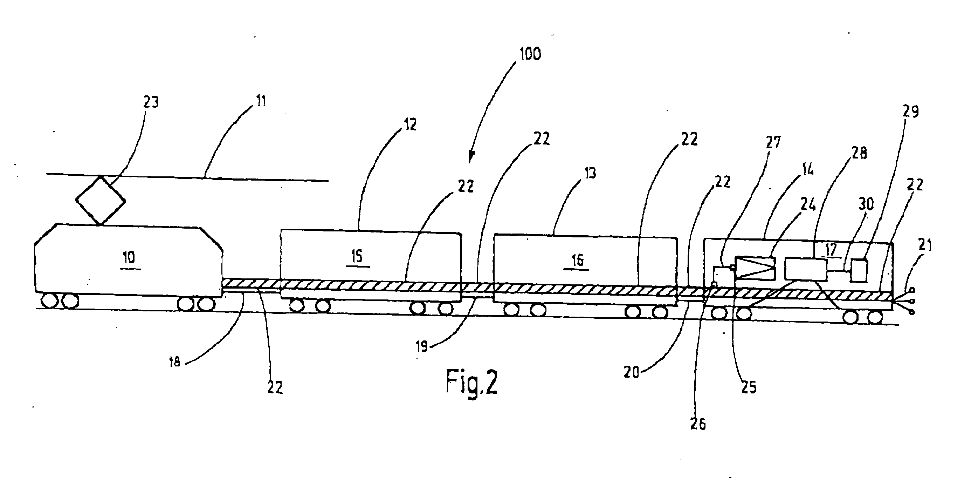

In einer weiteren in Fig. 2 gezeigten Ausführungsform des erfindungsgemäßen Güterzugs 100 ist zusätzlich der Sekundärantrieb 28 in den Güterwagen 14 integriert. Der Sekundärantrieb 28 erfolgt vorzugsweise in Gestalt von Elektromotoren und kann den Hauptantrieb des Triebfahrzeugs 10 ersetzen und bezieht die Energie aus dem Energieblock 29, der sich ebenfalls in dem Güterwagen 14 befindet. Sekundärantrieb 28 und Energieblock 29 sind über die Energieleitungen 30 gekoppelt. Bevorzugte Energiemittel in dem Energieblock 29 sind Batterie- und Wasserstoffzellen. Auch sind Dieselaggregate möglich.

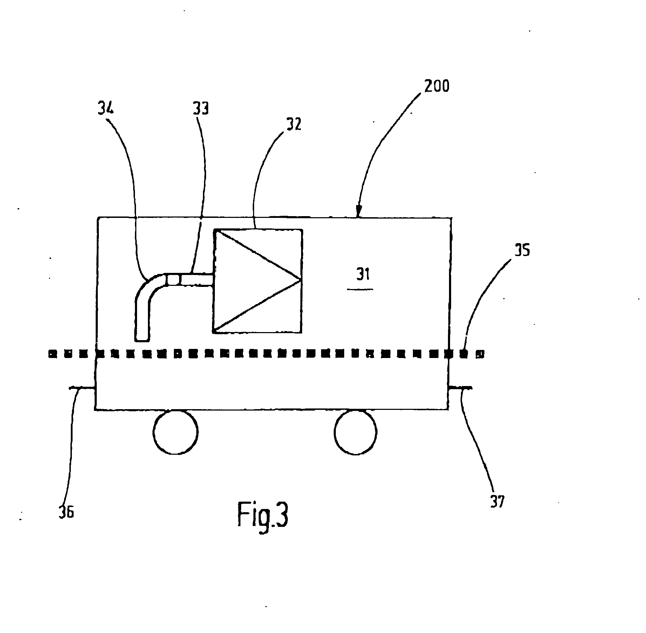

Aus Fig. 3 geht ein Güterwagen 200 gemäß der Erfindung hervor, dessen Behälter 31 mit einer Thyristorsteuerung 32 ausgestattet ist. Die Thyristorsteuerung 32 befindet sich in dem Behälter 31 des Güterwagens 200 und weist ein Anschlussmittel 33 (z. B. eine Steckdose) auf, um über eine daran gekoppelte Energieleitung 34 einer Energieversorgungsleitung 35, die als Zugsammelschiene vorliegt, verbindbar zu sein. Der Güterwagen 200 ist an seinen Enden mit Anschlussstücken 36, 37 für die feste mechanische Verbindung mit weiteren Güterwagen versehen. Bei den Anschlussstücken 36, 37 kann es sich bspw. um Schraubenkupplungen handeln.

Die vorliegende Erfindung beschränkt sich in ihrer Ausführung nicht auf die vorstehenden angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch machen. Bspw. kann der Güterwagen 200 zusätzlich noch einen Sekundärantrieb und/oder einen Energieblock aufweisen. Auch kann der Güterwagen 200 zusätzlich mit einem Wendezugsteuerstand versehen sein.

### Bezugszeichenliste

- 100: Güterzug
- 200: Güterwagen
- 10: Triebfahrzeug
- 11 1: Oberleitung
- 12: Güterwagen
- 13: Güterwagen
- 14: Güterwagen
- 15: Behälter
- 16: Behälter
- 17: Behälter
- 18: mechanische Verbindung
- 19: mechanische Verbindung
- 20: mechanische Verbindung
- 21: Wagenverbindung
- 22: Energieversorgungsleitung
- 23: Stromabnehmer
- 24: Thyristorsteuerung
- 25: Anschlussmittel
- 26: Anschlussmittel
- 27: Energieverbindungsleitung
- 28: Sekundärantrieb
- 29: Energieblock
- 30: Energieleitung
- 31: Behälter
- 32: Thyristorsteuerung
- 33: Anschlussmittel
- 34: Energieleitung
- 35: Energieversorgungsleitung
- 36: Anschlussstück
- 37: Anschlussstück

## Patentansprüche

1. Güterzug (100) mit einem Triebfahrzeug (10) und Güterwagen (12, 13, 14), die durch eine Energieversorgungsleitung (22) und Datenleitung verbunden sind, **dadurch gekennzeichnet, dass** mindestens ein Güterwagen (12, 13, 14) mit einer Thyristorsteuerung (24) ausgestattet ist.

2. Güterzug nach Anspruch 1, **dadurch gekennzeichnet, dass** die Thyristorsteuerung (24) in einen Behälter (15, 16, 17) der Güterwagen (12, 13, 14), integriert ist.

3. Güterzug nach Anspruch 1 oder 2, **dadurch gekennzeichnet, dass** die Thyristorsteuerung (24) und die Energieversorgungsleitung (22) miteinander verbunden sind.

4. Güterzug nach einem der Ansprüche 1 bis 3, **dadurch gekennzeichnet, dass** die Thyristorsteuerung (24) ein Anschlussmittel (25) aufweist und/oder die Energieversorgungsleitung (22) ein Anschlussmittel (26) aufweist.

5. Güterzug nach einem der vorhergehenden Ansprüche, **dadurch gekennzeichnet, dass** die Thyristorsteuerung (24) und die Energieversorgungsleitung (22) über eine Energieverbindungsleitung (27) miteinander verbunden sind.

6. Güterzug nach einem der vorhergehenden Ansprüche, **dadurch gekennzeichnet, dass** ein Energieblock (29) in mindestens einen Güterwagen (12, 13, 14) integriert ist und/oder ein Sekundärantrieb (28) in mindestens einen Güterwagen (12, 13, 14) integriert ist und/oder ein Wendezug mit Steuerstand in den Güterwagen (14) integriert ist und/oder die Güterwagen (12, 13, 14) durch feste mechanische Verbindungen (18, 19, 20) miteinander verbunden sind.

7. Güterzug nach einem der vorhergehenden Ansprüche, **dadurch gekennzeichnet, dass** sämtliche Güterwagen (12, 13, 14) mit einer Thyristorsteuerung (24) ausgestattet sind und/oder das Triebfahrzeug (10) eine Hybridlokomotive ist und/oder die Verbindungen zwischen dem Triebfahrzeug (10) und dem Güterwagen (12) und/oder zwischen den Güterwagen (12, 13, 14) untereinander durch automatische Kupplungen gegeben sind und/oder die Thyristorsteuerung (24) ein Converter ist.

8. Güterwagen (200), der an eine Energieversorgungsleitung (35) und Datenleitung koppelbar ist, **dadurch gekennzeichnet, dass** der Güterwagen (200) mit einer Thyristorsteuerung (32) ausgestattet ist.

9. Güterwagen nach Anspruch 8, **dadurch gekennzeichnet, dass** die Thyristorsteuerung (35) ein Anschlussmittel (33) aufweist und/oder der Güterwagen (200) einen Sekundärantrieb und/oder einen Energieblock aufweist.

10. Güterwagen nach einem der Ansprüche 8 oder 9, **dadurch gekennzeichnet, dass** der Güterwagen (200) einen Wendezugsteuerstand aufweist.

11. Güterwagen nach einem der Ansprüche 8 bis 10, **dadurch gekennzeichnet, dass** der Güterwagen (200) Anschlussmittel (36, 37) für die feste Verbindung mit weiteren Güterwagen aufweist und/oder die Thyristorsteuerung (32) ein Converter ist.

12. Verfahren zur energetischen Versorgung von Einheiten eines Güterzuges (100), wie bspw. Kältemaschinen in Behältern für temperaturgeführte Transporte, mittels einer Energieversorgungsleitung (22), insbesondere eine Zugsammelschiene, **dadurch gekennzeichnet, dass** eine Stromart der Energieversorgungsleitung (22) von einer in einen Güterwagen (12, 13, 14) des Güterzugs (100) integrierten Thyristorsteuerung (24) in eine andere Stromart umgewandelt wird.

13. Verfahren nach Anspruch 16, **dadurch gekennzeichnet, dass** die Thyristorsteuerung (24) mit der Energieversorgungsleitung (22) gekoppelt ist.

14. Verfahren nach Anspruch 12 oder 13, **dadurch gekennzeichnet, dass** die Thyristorsteuerung (24) in Gestalt eines Converters erfolgt.

15. Verwendung einer Thyristorsteuerung (24, 32) oder eines Converters für einen Güterzug gemäß einem der Ansprüche 1 bis 7 und/oder einen Güterwagen gemäß einem der Ansprüche 8 bis 11.
